# EUROPÄISCHE PATENTSCHRIFT

(11) **EP 3 966 139 B1**
(45) Veröffentlichungstag und Bekanntmachung des Hinweises auf die Patenterteilung: **12.07.2023**
(21) Anmeldenummer: 20722570.7
(22) Anmeldetag: 29.04.2020
(51) Int. Cl.: B65G 45/22

(54) **VERFAHREN UND VORRICHTUNG ZUM REINIGEN EINER OBERFLÄCHE EINES FÖRDERGURT VON RÜCKSTÄNDEN VON BERGBAULICH GEFÖRDERTEN ROHSTOFFEN UND ABRAUM**
METHOD AND DEVICE FOR CLEANING A SURFACE OF A CONVEYOR BELT OF RESIDUES OF RAW MATERIALS AND COVER MATERIAL CONVEYED IN MINING
PROCÉDÉ ET DISPOSITIF DE NETTOYAGE D'UNE SURFACE D'UNE BANDE TRANSPORTEUSE EN VUE D'ÉLIMINER DES RÉSIDUS DE MATIÈRES PREMIÈRES TRANSPORTÉES POUR L'INDUSTRIE MINIÈRE ET DES DÉBLAIS

(30) Priorität: 10.05.2019 DE 102019112307
(43) Veröffentlichungstag der Anmeldung: 16.03.2022
(73) Patentinhaber: RWE Power AG, 45141 Essen (DE)
(72) Erfinder: HEIERTZ, Arie-Johann, 41066 Mönchengladbach (DE)
(74) Vertreter: Keenway Patentanwälte Neumann Heine Taruttis
(86) Internationale Anmeldenummer: PCT/EP2020/061840
(87) Internationale Veröffentlichungsnummer: WO 2020/229172

(56) Entgegenhaltungen:
- CN-U- 202 296 287
- CN-U- 207 827 276
- DE-A1- 10 144 574
- DE-A1- 19 821 560
- DE-A1-102008 043 465
- GB-A- 1 091 544
- KR-A- 20100 096 904
- US-A- 4 601 385
- US-A- 5 355 992
- US-A1- 2014 374 046
- US-B1- 6 364 959
- US-B1- 8 348 046

## Beschreibung

Gegenstand der vorliegenden Erfindung ist ein Verfahren und eine Vorrichtung zum Reinigen einer Oberfläche eines Fördergurtes von Rückständen von bergbaulich geförderten Rohstoffen wie beispielsweise Erzen und/oder Kohle und Abraum.

Förderbänder mit Fördergurten werden regelmäßig zum Transportieren von bergbaulich geförderten Rohstoffen und Abraum eingesetzt, beispielweise um diese von einem Ort der Gewinnung des Rohstoffs zu einer Weiterverarbeitung zu transportieren oder um diese von einem Bunker zu einer Verladestelle zu transportieren. Die entsprechenden Förderbänder sind speziell an die Bedingungen beim Transport von Rohstoffen und Abraum angepasst, insbesondere im Hinblick auf Material, Oberfläche, Länge, Breite und Ausgestaltung der Förderbänder. Diese werden oft mit Längen von einem Kilometer oder mehr betrieben. Beim Transport der Rohstoffe bzw. des Abraums ist regelmäßig die Staubentwicklung ein Problem. Die entstehenden Stäube werden in die Umgebung abgegeben. Die Stäube entstehen unter anderem an den Tragrollen, Umkehr- oder Antriebsrollen über die der Fördergurt geführt wird, da dort die Anhaftungen auf dem Fördergurt abgerieben werden.

Zur Entfernung dieser Anhaftungen sind Förderbandabstreifer bekannt, beispielsweise aus der DE 10 2011 016 954 A1. Insbesondere beim Transport von bergbaulich geförderten Rohstoffen haben sich diese als nachteilig erwiesen, da es mit Förderbandabstreifern nicht möglich ist, die genannten Anhaftungen vom Fördergurt fast vollständig zu entfernen.

Es wird ferner ein Verfahren als bekannt angenommen, bei dem der Fördergurt einseitig mit Wasser besprüht wird, um den Belag zu befeuchten. Hier hat sich herausgestellt, dass dieses Verfahren nicht zu einer möglichst umfassenden Entfernung der Anhaftungen führt und gleichzeitig insbesondere Tragstrukturen des Fördergurtes stärkerer Korrosion ausgesetzt sind.

Aus der US 2014/374046 A1 ist ein Verfahren zur Reinigung einer Maschine zur Papierherstellung bekannt. Aus der CN 207 827 276 U ist ein Verfahren zur Reinigung eines Fördergurtes bekannt, mit dem Tierkadaver transportiert werden. Aus der GB 1,091,544 B ist ein Verfahren zur Reinigung eines Fördergurtes von Schlamm bekannt. US5355992A offenbart eine Vorrichtung gemäß dem Oberbegriffe des Anspruchs 1.

Hiervon ausgehend liegt der vorliegenden Erfindung die Aufgabe zugrunde, die aus dem Stand der Technik bekannten Nachteile zumindest teilweise zu überwinden und insbesondere ein Verfahren und eine Vorrichtung anzugeben, mit denen ein Fördergurt einfach und effektiv auch von Rückständen von bergbaulich geförderten Rohstoffen zu reinigen und dabei eine Korrosion insbesondere von Tragstrukturen des Fördergurtes zu vermeiden.

Diese Aufgabe wird gelöst mit den Merkmalen der unabhängigen Ansprüche. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vor-geben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Das erfindungsgemäße Verfahren zum Reinigen einer Oberfläche eines sich in einer Bewegungsrichtung bewegenden Fördergurtes von Rückständen von bergbaulich geförderten Stoffen, insbesondere bergbaulich geförderte Rohstoffe und/oder Abraum, umfasst die folgenden Schritte:
a) Beaufschlagen der Oberfläche mit einer Mehrzahl von Fluidstrahlen unter einem Betriebsdruck von mindestens 30 bar in einem vorgebbaren Auftreffwinkel von weniger als 90° entgegen der Bewegungsrichtung zur Entfernung der Rückstände;
b) Entfernen zumindest eines Teils des Fluids von der Oberfläche.

Unter einem Fördergurt wird ein endloses Band verstanden, welches auf Tragrollen und Antriebsrollen umläuft und welches gleichzeitig als Trag- und Zugmittel dient. Insbesondere weist der Fördergurt eine Karkasse auf, die textile oder metallische Seileinlagen umfasst, die Zugkräfte übertragen. Diese Karkasse ist bevorzugt mit einer Ummantelung umgeben. Diese ist für Fördergurte zum Transport von bergbaulich geförderten Rohstoffen und Abraum wie beispielsweise Erzen oder Kohle bevorzugt von einer Ummantelung umgeben, die elastomeren Stoffen umgeben ist, insbesondere einer Dicke von 10 mm bis 70 mm [Millimetern]. Der Fördergurt ist bevorzugt Teil eines Förderbandes, insbesondere eines Gurtbandförderers oder Gurtförderers. Unter einem Förderband wird insbesondere eine Vorrichtung umfassend mindestens eine Antriebsrolle, mindestens eine Tragrolle und mindestens zwei Umlenkstationen verstanden, die von einer Tragkonstruktion getragen werden und die den Fördergurt führen.

Der Auftreffwinkel der Fluidstrahlen beträgt weniger als 90°, wobei die Fluidstrahlen entgegen der Bewegungsrichtung gerichtet ist. Der Auftreffwinkel wird bevorzugt zwischen 20° und 60° gewählt. In diesem Winkelbereich lassen sich besonders hohe Reinigungseffizienzen erzielen.

Bevorzugt wird die Oberfläche des Fördergurtes vor Schritt a) über mindestens einen mechanischen Grobabstreifer (Primär- und/oder Sekundärabstreifer) zum Abstreifen von groben Rückständen geführt.

Unter einem mechanischen Grobabstreifer wird insbesondere eine Art Lippe verstanden, die in Kontakt mit der Oberfläche des Fördergurts gebracht wird. Diese Lippe ist insbesondere aus einem elastomeren Kunststoff, insbesondere Polyurethan (PU), und/oder einem Metall, insbesondere umfassend Wolframcarbid (WC) beispielsweise als Kunststoffelement mit einer metallischen Kante, ausgebildet. Durch das Führen der Oberfläche über den mechanischen Grobastreifer werden insbesondere gröbere Rückstände von der Oberfläche abgestreift, so dass stromabwärts dieses Grobabstreifers Rückstände verbleiben, die nicht durch einen mechanischen Grobabstreifer entfernbar sind.

Die Fluidstrahlen werden durch Düsen erzeugt, die den Fluidstrahl auf die Oberfläche richten. Die Düsen werden insbesondere mit einem Fluid wie insbesondere Wasser unter Druck beaufschlagt. Gegebenenfalls können Reinigungszusätze zugeführt werden, die in Abhängigkeit von dem entsprechenden Rohstoff gewählt werden. Die Fluidstrahlen sind bevorzugt als Fluidkegel ausgebildet, die einen Öffnungswinkel aufweisen. Bevorzugt kommen Düsen zum Einsatz, die solche Fluidkegel erzeugen. Insbesondere bei einem Fluidkegel wird der Auftreffwinkel als der Winkel zwischen der Kegelachse und der Tangente der Oberfläche im Auftreffen der Kegelachse verstanden.

Bevorzugt werden so viele Fluidstrahlen eingesetzt, dass die gesamte Breite des Fördergurtes abgedeckt wird. Insbesondere werden die Fluidstrahlen so eingesetzt, dass sie sich nicht im Strahl überlappen, um die gewünschte Impulsrichtung des Fluidstrahls nicht durch eine Überlappung zu verändern. Die entsprechenden Düsen werden daher in Bezug auf ihren Öffnungswinkel des Fluidkegels und in Bezug auf den Abstand zur Oberfläche und die Ausrichtung bevorzugt entsprechend angepasst.

Die Ausrichtung der Fluidstrahlen gegenüber der Oberfläche ist zeitlich unveränderbar, das heißt insbesondere, dass die Fluidstrahlen nicht relativ zur Oberfläche bewegt werden. Somit liegt ein Auftreffwinkel vor, der so gewählt wird, dass eine optimale Reinigungswirkung in Schritt a) erreicht werden kann.

In Verfahrensschritt b) werden neben dem Fluid ggf. noch vorhandene Anhaftungen von Rückständen entfernt, die gegebenenfalls in Verfahrensschritt a) nur gelockert aber nicht entfernt wurden.

Unter der Oberfläche des Fördergurtes wird die Tragfläche des Fördergurtes verstanden. Durch die umlaufende Bewegung über Antriebsrollen, Tragrollen und Umlenkstationen ist die Tragfläche und damit die Oberfläche des Fördergurtes immer außen, so dass bevorzugt eine Reinigung der Oberfläche des Fördergurtes erfolgen kann, wenn diese nicht mehr mit zu transportierendem Gut belegt ist, sondern nur noch die Rückstände verbleiben, beispielsweise im Bereich der Umlenkstationen oder im unteren Bereich des Fördergurtes.

Verfahrensschritt b) wird bevorzugt über eine Adhäsionsrolle, gegebenenfalls in Kombination mit mindestens einer Abstreiferlippe, durchgeführt. Unter einer Adhäsionsrolle wird eine Rolle verstanden, über die der Fördergurt geführt wird und die an den Fördergurt angedrückt wird. Feuchtigkeit auf dem Fördergurt wird adhäsiv an die Adhäsionsrolle gebunden, durch Zentrifugalkräfte wird die Feuchtigkeit wieder von der Adhäsionsrolle entfernt, wenn diese nicht mehr in Kontakt mit dem Fördergurt steht. Die entsprechenden Fluidtropfen werden bevorzugt in einer Auffangwanne aufgefangen und abgeführt. Durch diese Ausgestaltung kann eine effiziente Trocknung des Fördergurtes erreicht werden.

Das hier beschriebene Verfahren erlaubt eine effiziente Reinigung des Fördergurtes. Gleichzeitig wird das dann gesäuberte Band über die weiteren Antriebsrollen und Transportrollen geführt, ohne dass es zum Abrieb der (dann nicht mehr vorhandenen) Rückstände kommen kann. Der durch den Abrieb an Rollen entstehende Staub entsteht somit nicht, so dass eine wirksame Staubreduzierung erreicht wird.

Gemäß einer vorteilhaften Ausgestaltung weisen die Fluidstrahlen einen Öffnungswinkel von 20° bis 60° auf.

Ein Öffnungswinkel von 20° bis 60° führt zu einem hohen Auftreffimpuls auf dem Fördergurt und damit zu einer effizienten Reinigung. Der Einsatz von Fluidstrahlen mit unterschiedlichen Öffnungswinkeln ist erfindungsgemäß möglich.

Gemäß einer vorteilhaften Ausgestaltung umfasst das Fluid Wasser. Der Einsatz von Wasser ist besonders bevorzugt, da hier eine übliche Hochdruckpumpe und übliche Hochdruckleitungen zum Einsatz kommen können und neben einer Filterung keine weiteren Maßnahmen zur Reinigung des Fluids getroffen werden müssen. Weiterhin ist die Abgabe von Wasser an die Umwelt ohne größere Probleme möglich, ohne, dass weitere Vorkehrungen getroffen werden müssen.

Erfindungsgemäß wird nach Schritt a) und insbesondere vor Schritt b) die Oberfläche des Fördergurtes über einen mechanischen Feinabstreifer geführt.

Durch den mechanischen Feinabstreifer, der insbesondere als eine elastomere Lippe ausgeführt ist, werden einerseits Rückstände abgestreift, die in Schritt a) zwar vom Fördergurt gelöst aber nicht entfernt worden sind, und andererseits bereits Fluid vom Fördergurt abgestreift, bevor die weitere Entfernung in Schritt b) erfolgt. Hierdurch wird die Trocknung des Fördergurtes weiter verbessert und die Gefahr von Korrosion weiter reduziert. Der mechanische Feinabstreifer kann insbesondere eine oder mehr Abstreiflippen umfassen.

Gemäß einer vorteilhaften Ausgestaltung wird der Betriebsdruck in Abhängigkeit von mindestens einem der folgenden Parameter festgelegt:
i) der Art des bergbaulich geförderten Stoffs,
ii) von Umgebungsbedingungen, insbesondere der Temperatur und/oder der Luftfeuchtigkeit;
iii) einer Dicke der Rückstände auf der Oberfläche bestimmt wird; und
iv) einer Bewegungsgeschwindigkeit des Fördergurtes.

Unter der Art des bergbaulich geförderten Stoffs wird insbesondere verstanden, ob ein Erz, eine Kohle, Abraum oder ähnliches transportiert wird. Die Art des Stoffs oder Rohstoffs hat dabei Einfluss auf die Anhaftungen am Fördergurt. Unter den Umgebungsbedingungen werden insbesondere die Umgebungstemperatur und die (relative) Luftfeuchtigkeit verstanden, die Einfluss auf das Anhaftverhalten an der Oberfläche aufweisen.

Einer oder mehrere der angegebenen Parameter i), ii), iii) und iv) werden bevorzugt zu Festlegung des Betriebsdrucks herangezogen, um so einen Betriebsdruck einstellen zu können, der sicher die Entfernung von Rückständen in Schritt a) ermöglicht.

Gemäß einer vorteilhaften Ausgestaltung werden die Fluidstrahlen als Flachkegel auf die Oberfläche geführt werden und die Fluidstrahlen so ausgebildet, dass sich benachbarte Fluidstrahlen auf der Oberfläche nicht überlappen. Bevorzugt sind dabei die Fluidstrahlen so ausgebildet, dass trotzdem eine vollständige Breite des Fördergurtes von den Fluidstrahlen getroffen werden.

Unter einem Flachkegel wird im Rahmen dieses Dokumentes ein Fluidstrahl verstanden, der einem Kegel gleicht, der in einer Querschnittsrichtung gestaucht ist. Somit hat ein Flachkegel in einem Querschnitt keine runde Form, sondern eher ovale Form oder die Form eines "racetracks" (gerade Seiten, die durch gekrümmte Bereiche miteinander verbunden sind). Solche Flachkegelförmigen Fluidstrahlen können insbesondere durch Flachstrahldüsen erzeugt werden. Durch die Ausbildung der Fluidstrahlen als Flachkegel kann die Zahl der notwendigen Fluidstrahlen zur Abdeckung einer vollständigen Breite des Fördergurtes signifikant reduziert werden. Gleichzeitig kann durch den Einsatz entsprechender Düsen eine zuverlässige Fluidstrahldefinition erreicht werden. Durch die Verhinderung einer Überlappung der Fluidstrahlen auf der Oberfläche wird eine besonders wirksame Reinigung erreicht. Überlappende Bereiche würden zu sich vektoriell addierenden Impulsen auf der Oberfläche in diesen Bereichen führen, die zu einer Reduktion der Reinigungseffizienz führen können.

Gemäß einer vorteilhaften Ausgestaltung umfassen die bergbaulich geförderten Stoffe mindestens einen der folgenden Rohstoffe:
a) Erze;
b) Salze:
c) Braunkohle
d) Steinkohle
e) Anthrazit;
f) Bauxit;
g) Industrieminerale; und
h) Abraum

Gemäß einem weiteren Aspekt wird eine Vorrichtung zum Reinigen einer Oberfläche eines in einer Bewegungsrichtung bewegbaren Fördergurtes von Rückständen von bergbaulich geförderten Rohstoffen, insbesondere nach dem erfindungsgemäßen Verfahren vorgeschlagen, umfassend:
einen Düsenbalken mit einer Mehrzahl von Düsen zum Aufbringen von Fluidstrahlen auf die Oberfläche des Fördergurtes;
mindestens ein Fluidentfernungselement zum Entfernen zumindest eines Teils des Fluids von der Oberfläche,
eine Hochdruckfluidversorgung zur Bereitstellung eines Fluides zum Düsenbalken unter einem Betriebsdruck von mindestens 30 bar
welche sich dadurch auszeichnet, dass die Düsen so ausgebildet und ausgerichtet sind, dass die Fluidstrahlen entgegengesetzt der Bewegungsrichtung in einem Auftreffwinkel von weniger als 90° auf die Oberfläche treffen.

Gemäß einer vorteilhaften Ausgestaltung weisen die Düsen einen Öffnungswinkel von 20° bis 60° auf.

Hierunter sind Düsen zu verstehen, die einen Fluidkegel mit einem Öffnungswinkel von 20° bis 60° erzeugen.

Gemäß einer vorteilhaften Ausgestaltung sind die Düsen als Flachstrahldüsen ausgebildet und so ausgebildet und angeordnet, dass sich benachbarte Fluidstrahlen auf der Oberfläche nicht überlappen.

Unter einer Flachstrahldüse wird insbesondere eine Düse verstanden, die im Betrieb einen Flachstrahlkegel erzeugt. Flachstrahldüsen sind vorteilhaft einsetzbar, da der erzeugte Strahlkegel eine gleichmäßige Flüssigkeits- und Druckverteilung aufweist.

Gemäß einer vorteilhaften Ausgestaltung sind die Düsen so ausgebildet und angeordnet, dass eine gesamte Breite des Fördergurtes durch die durch sie erzeugbaren Fluidstrahlen mit Fluid beaufschlagbar ist.

Erfindungsgemäß umfasst das Fluidentfernungselement eine Adhäsionsrolle.

Die für das erfindungsgemäße Verfahren offenbarten Details und Vorteile lassen sich auf die erfindungsgemäße Vorrichtung übertragen und anwenden und umgekehrt. Das erfindungsgemäße Verfahren wird mit einer erfindungsgemäßen Vorrichtung umgesetzt.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen schematisch:
- Fig. 1: eine Ansicht einer Vorrichtung zum Reinigen einer Oberfläche eines Fördergurtes;
- Fig. 2: einen Düsenbalken der Vorrichtung nach Fig. 1 in einer ersten Ansicht; und
- Fig. 3: den Düsenbalken aus Fig. 2 in einer zweiten Ansicht;
- Fig. 4: ein Sprühbild einer Düse;
- Fig. 5: eine Düse eines Düsenbalkens nach Fig. 2 oder 3;
- Fig. 6: eine perspektivische Ansicht einer Vorrichtung zum Reinigen einer Oberfläche eines Fördergurtes;
- Fig. 7: einen Längsschnitt eines Fördergurtes mit Adhäsionsrolle;
- Fig. 8: einen Längsschnitt eines Fördergurtes mit verschiedenen Auftreffwinkeln der Fluidstrahlen; und
- Fig. 9: einen Längsschnitt eines weiteren Beispiels einer Vorrichtung zum Reinigen einer Oberfläche eines Fördergurtes.

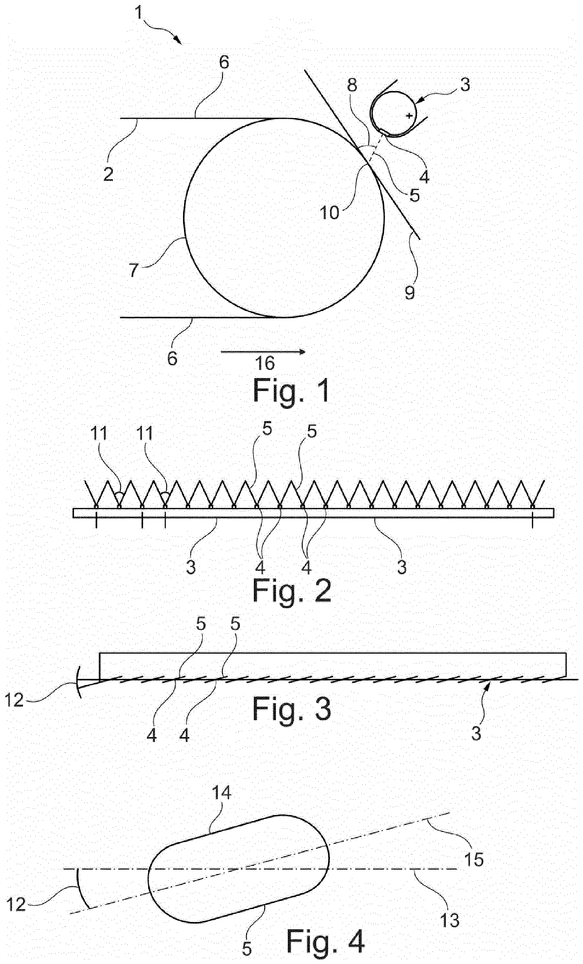

Gleiche Elemente sind mit identischen Bezugszeichen versehen. Fig. 1 zeigt einen Ausschnitt einer Vorrichtung 1 zum Reinigen eines Fördergurtes 2. Die Vorrichtung 1 umfasst einen Düsenbalken 3 mit einer Mehrzahl von Düsen 4 zum Aufbringen von Fluidstrahlen 5 auf eine Oberfläche 6 des Fördergurtes 2, der sich in Bewegungsrichtung 16 bewegt. Bei der Oberfläche 6 handelt es sich um die Tragfläche des Fördergurtes 2, der zum Transport von hier nicht gezeigten bergbaulich geförderten Rohstoffen und Abraum eingesetzt wird. Der Fördergurt 2 ist unendlich und wird unter anderem über zwei Umlenkeinrichtungen 7 geführt, so dass die Oberfläche 6 im oberen Bereich oben und im unteren Bereich unten liegt. Die Oberfläche 6 liegt somit immer außen.

Die Düsen 4 sind Flachstrahldüsen und so ausgebildet, dass der Fluidstrahl 5 unter einem Auftreffwinkel 8 von weniger als 90° und insbesondere von 20° bis 60° entgegen der Bewegungsrichtung 16 auf die Oberfläche 6 beaufschlagt wird. Der Auftreffwinkel 8 ist dabei als der Winkel zwischen dem Fluidstrahl 5 bzw. einer Kegelachse des Fluidstrahls 5 und einer Tangente 9 im Auftreffpunkt 10 des Fluidstrahls 5 bzw. der Kegelachse des Fluidstrahls 5 definiert. Im Betrieb wird der Düsenbalken 3 mit dem Fluid, insbesondere Wasser, unter einem Druck von wenigstens 30 bar versorgt, welches dann durch die Düsen 4 den Düsenbalken 3 verlässt und die Fluidstrahlen 5 bildet, die unter hohem Druck aus der Düse 4 austreten und dann auf die Oberfläche 6 auftreffen.

Durch den flachen Auftreffwinkel 8 im gekrümmten Bereich des Fördergurtes 2 wird eine effiziente Reinigung des Fördergurtes 2 von Rückständen von bergbaulich geförderten Rohstoffen und/oder Abraum erreicht. Es sei ausdrücklich angemerkt, dass auch eine Ausbildung der Vorrichtung 1 möglich ist, bei der die Fluidstrahlen 5 auf einen geraden Abschnitt des Fördergurtes 2 auftreffen.

Fig. 2 zeigt eine erste Ansicht eines Düsenbalkens 3 mit einer Vielzahl von Düsen 4. Diese sind der Übersichtlichkeit halber nur teilweise mit Bezugszeichen versehen. Jede Düse 4 ist so ausgebildet, dass sie einen Fluidstrahl 5 auf die Oberfläche 6 emittiert. Jeder Fluidstrahl 5 weist einen identischen Öffnungswinkel 11 auf. Der Düsenbalken 3 ist dabei über der Querrichtung des Fördergurtes 2 und parallel zu diesem ausgebildet.

Fig. 3 zeigt eine Draufsicht als zweite Ansicht des Düsenbalkens 3, Fig. 4 eine Düse 4 im Detail. Die Düsen 4 sind dabei so ausgerichtet, dass die Flachkegel 14 der Fluidstrahlen 5 um einen gewissen Verdrehwinkel 12 gegen eine Längsachse 13 des Düsenbalkens 3 verdreht sind, so dass eine Flachkegellängsachse 15 den Verdrehwinkel 12 mit der Längsachse 13 des Düsenbalkens 3 einschließt. Dies führt gemeinsam mit einer Wahl der Abstände zwischen benachbarten Düsen 4 in Abhängigkeit vom Öffnungswinkel 11, vom Verdrehwinkel 12 und vom Abstand zwischen Düsenbalken 3 und Fördergurt 2 dazu, dass die als Flachkegel 14 ausgebildeten Fluidstrahlen einander nicht überlappen. So kann lokal ein definierter Impuls auf die Oberfläche 6 übertragen werden. Sollten Fluidstrahlen 5 überlappen, kommt es zu einer vektoriellen Wechselwirkung dieser Fluidstrahlen 5, die die Reinigungswirkung reduziert. Dennoch kommt es durch die versetzte Anordnung der Düsen 4 zu einer Erfassung der gesamten Breite des Fördergurtes 2 durch die Fluidstrahlen 5.

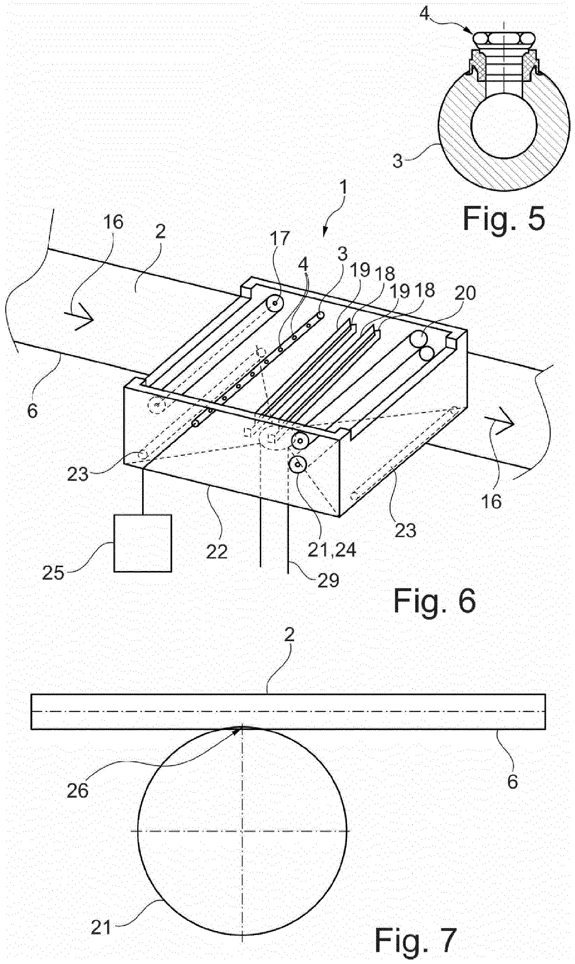

Fig. 5 zeigt ein Detail des Düsenbalkens 3 im Querschnitt. Die Düse 4 ist in ein Gewinde des Düsenbalkens 3 eingeschraubt.

Fig. 6 zeigt in perspektivischer Ansicht ein Beispiel einer Vorrichtung 1 zur Reinigung eines Fördergurtes 2, der sich in einer Bewegungsrichtung16 mit einer Geschwindigkeit von bis zu 7,5 m/s [Meter pro Sekunde] bewegt. Beim Eintreten in die Vorrichtung 1 wird der Fördergurt 2 über eine erste Führungsrolle 17 geführt. Die Vorrichtung 1 wird im unteren Bereich des Förderbandes ausgeführt, so dass hier die Oberfläche 6 und damit die Tragfläche unten ist. Der Fördergurt 2 wird dann über den Düsenbalken 3 mit einer Vielzahl von Düsen 4 (die der Übersichtlichkeit halber nicht alle mit Bezugszeichen versehen sind) geführt. Die Düsen 4 sind entgegen der Bewegungsrichtung 16 des Fördergurtes 2 ausgerichtet. Durch die entsprechenden (hier nicht gezeigten) Fluidstrahlen erfolgt wie beschrieben die Reinigung der Oberfläche 6 des Fördergurtes 2 von Rückständen bergbaulich geförderter Rohstoffe. In Bewegungsrichtung 16 stromabwärts des Düsenbalkens 3 sind zwei Feinabstreifer 18 mit Abstreiflippen 19 ausgebildet, die eventuell noch vorhandenen Reste der Rohstoffe vom Fördergurt 2 abstreifen. Gleichzeitig wird auch auf der Oberfläche 6 haftendes Fluid abgestreift. Die Abstreiflippen 19 sind bevorzugt aus einem Elastomer, insbesondere aus Polyurethan ausgebildet. Der Fördergurt 2 wird stromabwärts der Feinabstreifer 18 vor Verlassen der Vorrichtung 1 über eine zweite Führungsrolle 20 geführt, die jedoch keinen Kontakt mit der feuchten Oberfläche 6 des Fördergurtes 2 hat. Mit der Oberfläche 6 ist eine Adhäsionsrolle 21 in Kontakt, die die verbleibende Feuchtigkeit von der Oberfläche 6 adhäsiv abführt. Die Adhäsionsrolle 21 wirkt somit als Feuchtigkeitsentfernungselement 24. Die Adhäsionsrolle 21 ist bevorzugt aus einem Stahl ausgebildet und weist erfindungsgemäß umfangsseitig eine elastomere Beschichtung auf.

Die Vorrichtung 1 weist ein Gehäuse 22 auf, welches im vorliegenden Beispiel aus Edelstahl ausgeführt ist. Dieses nimmt Fluid auf, welches von der Oberfläche 6 des Fördergurtes 2 abtropft oder durch die Abstreiflippen 19 oder die Adhäsionsrolle 21 entfernt wird. Dieses Fluid fließt durch ein Abflussrohr 29 ab. Zusätzlich sind Spülrohre 23 ausgebildet, durch die weiteres Fluid in das Gehäuse 22 eingebracht werden kann, um eventuell im Gehäuse 22 verbleibende Rückstände der Rohstoffe auszuspülen. Weiterhin umfasst die Vorrichtung 1 eine Hochdruckfluidversorgung 25, die den Düsenbalken 3 mit dem Fluid unter einem Druck von wenigstens 30 bar bis zu 150 bar versorgt. Dieser Betriebsdruck ist dabei einstellbar.

Fig. 7 zeigt schematisch das Wirkprinzip einer Adhäsionsrolle 21 zur Abführung von Feuchtigkeit auf einem Fördergurt 2. Die Adhäsionsrolle 21 rotiert entsprechend der Bewegungsgeschwindigkeit des Fördergurtes 2 und rollt dabei auf dem Fördergurt 2 ab und bindet die Feuchtigkeit auf der Oberfläche 6 des Fördergurtes 2 adhäsiv. Die Effizienz der Trocknung kann dabei dadurch weiter erhöht werden, dass die Adhäsionsrolle 21 so ausgebildet ist und an den Fördergurt angepress wird, dass sie in einem Walkbereich 26 den Fördergurt 2 elastisch verformt. Nach Verlassen des Walkbereichs 26 ist die Feuchtigkeit auf der Oberfläche der Adhäsionsrolle 21 adhäsiv gebunden. Im Laufe der Rotation der Adhäsionsrolle 21 wird die Feuchtigkeit aufgrund der vorliegenden Zentrifugalkräfte wieder von der Adhäsionsrolle 21 entfernt.

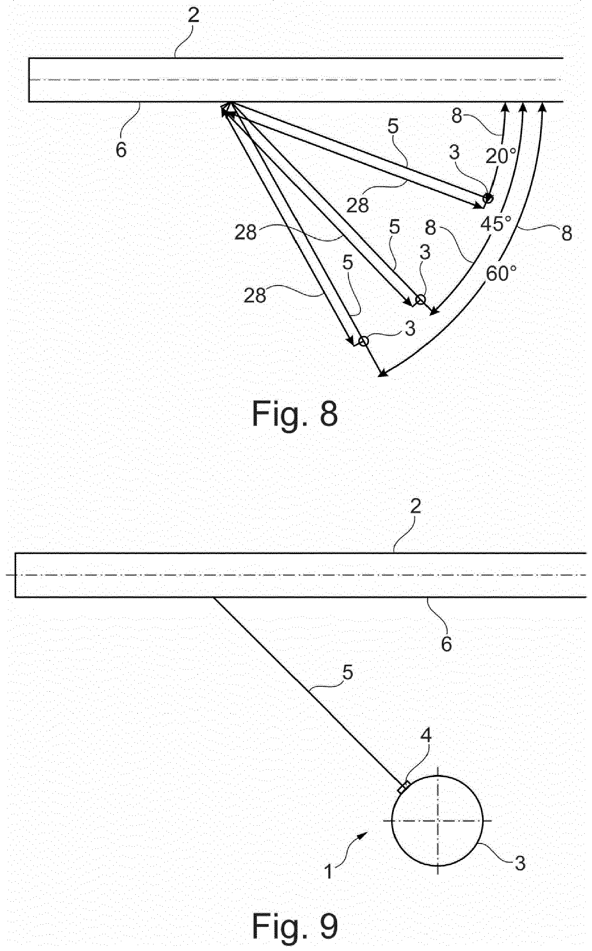

Fig. 8 zeigt schematisch mögliche Auftreffwinkel 8 auf den Fördergurt 2. Hierbei ist die nicht vollständig gezeigte Vorrichtung 1 so ausgebildet, dass die Fluidstrahlen 5 den Fördergurt 2 in einem geraden Bereich Treffen. Die Tangente im Auftreffpunkt verläuft somit auf der Oberfläche des Fördergurtes 2. Fig. 8 zeigt beispielhaft Auftreffwinkel 8 von 20°, 45° und 60°. Ein Abstand 28 zwischen Düsenbalken 3 und Oberfläche 6 des Fördergurtes 2 bleibt dabei konstant. Die verschiedenen Auftreffwinkel 8 werden durch Variation der Position des Düsenbalkens 3 realisiert.

Fig. 9 zeigt schematisch eine Ausgestaltung der Vorrichtung 1 bei dem die Fluidstrahlen 5 auf den geraden Bereich des Fördergurtes 2 treffen. Auf die oben gemachten Ausführungen wird verwiesen.

### Bezugszeichenliste

- 1: Vorrichtung zum Reinigen eines Fördergurtes
- 2: Fördergurt
- 3: Düsenbalken
- 4: Düse
- 5: Fluidstrahl
- 6: Oberfläche
- 7: Umlenkeinrichtung
- 8: Auftreffwinkel
- 9: Tangente
- 10: Auftreffpunkt
- 11: Öffnungswinkel
- 12: Verdrehwinkel
- 13: Längsachse
- 14: Flachkegel
- 15: Flachkegellängsachse
- 16: Bewegungsrichtung
- 17: erste Führungsrolle
- 18: Feinabstreifer
- 19: Abstreiflippe
- 20: Führungsrolle
- 21: Adhäsionsrolle
- 22: Gehäuse
- 23: Spülrohr
- 24: Feuchtigkeitsentfernungselement
- 25: Hochdruckfluidversorgung
- 26: Walkbereich
- 28: Abstand
- 29: Abflussrohr

## Patentansprüche

1. Vorrichtung (1) zum Reinigen einer Oberfläche (6) eines in einer Bewegungsrichtung (16) bewegbaren Fördergurtes (2) von Rückständen von bergbaulich geförderten Stoffen, insbesondere von bergbaulich geförderten Rohstoffen und/oder Abraum, umfassend:
einen Düsenbalken (3) mit einer Mehrzahl von Düsen (4) zum Aufbringen von Fluidstrahlen (5) auf die Oberfläche (6) des Fördergurtes (2);
mindestens ein Fluidentfernungselement (24) zum Entfernen zumindest eines Teils des Fluids von der Oberfläche (6),
wobei die Düsen so ausgebildet und ausgerichtet sind, dass die Fluidstrahlen (5) entgegengesetzt der Bewegungsrichtung (16) in einem Auftreffwinkel (8) von weniger als 90° auf die Oberfläche (6) treffen, wobei die Vorrichtung (1) weiterhin einen mechanischen Feinabstreifer (18) umfasst, über den der Fördergurt (2) führbar ist, wobei der Feinabstreifer (18) zwischen Düsenbalken (3) und Fluidentfernungselement (24) ausgebildet ist,
**dadurch gekennzeichnet, dass** das Fluidentfernungselement (24) eine Adhäsionsrolle (21) umfasst, welche umfangsseitig eine elastomere Beschichtung aufweist, und wobei die Vorrichtung (1) eine Hochdruckfluidversorgung (25) zur Bereitstellung eines Fluides zum Düsenbalken (3) unter einem Druck von mindestens 30 bar umfasst.

2. Vorrichtung nach Anspruch 1, bei der die Düsen einen Öffnungswinkel (11) von 20° bis 60° aufweisen.

3. Vorrichtung (1) nach einem der vorstehenden Ansprüche, bei dem die Düsen (4) als Flachstrahldüsen ausgebildet sind und diese so ausgebildet und angeordnet sind, dass sich benachbarte Fluidstrahlen (5) auf der Oberfläche (6) nicht überlappen.

4. Vorrichtung (1) nach einem der vorstehenden Ansprüche, bei dem die Düsen (4) so ausgebildet und angeordnet sind, dass eine gesamte Breite des Fördergurtes (2) durch die durch sie erzeugbaren Fluidstrahlen (5) mit Fluid beaufschlagbar ist.

5. Verfahren zum Reinigen einer Oberfläche (6) eines sich in einer Bewegungsrichtung (16) bewegenden Fördergurtes (2) von Rückständen von bergbaulich Stoffen mit einer Vorrichtung (1) nach einem der vorstehenden Ansprüche, umfassend die folgenden Schritte:
a) Beaufschlagen der Oberfläche (6) mit einer Mehrzahl von Fluidstrahlen (5) unter einem Betriebsdruck von mindestens 30 bar in einem vorgebbaren Auftreffwinkel (8) von weniger als 90° entgegen der Bewegungsrichtung (16) zur Entfernung der Rückstände;
b) Entfernen zumindest eines Teils des Fluids von der Oberfläche (6),
wobei nach Schritt a) und vor Schritt b) die Oberfläche (6) des Fördergurtes (2) über den mechanischen Feinabstreifer (18) geführt wird.

6. Verfahren nach Anspruch 5, bei dem die bergbaulich geförderten Stoffe bergbaulich geförderte Rohstoffe und/oder Abraum umfassen.

7. Verfahren nach Anspruch 5 oder 6, bei dem ein Auftreffwinkel (8) zwischen 20° und 60° vorgegeben wird.

8. Verfahren nach einem der Ansprüche 5 bis 7, bei dem die Fluidstrahlen (5) einen Öffnungswinkel (11) von 20° bis 60° aufweisen.

9. Verfahren nach einem der Ansprüche 5 bis 8, bei dem der Betriebsdruck in Abhängigkeit von mindestens einem der folgenden Parameter festgelegt wird:
i) der Art des bergbaulich geförderten Stoffes,
ii) von Umgebungsbedingungen, insbesondere der Temperatur und/oder der Luftfeuchtigkeit;
iii) einer Dicke der Rückstände auf der Oberfläche (6) bestimmt wird; und
iv) einer Bewegungsgeschwindigkeit des Fördergurtes.

10. Verfahren nach einem der Ansprüche 5 bis 9, bei dem die Fluidstrahlen (5) als Flachkegel (14) auf die Oberfläche geführt werden und die Fluidstrahlen (5) so ausgebildet werden, dass sich benachbarte Fluidstrahlen (5) auf der Oberfläche (6) nicht überlappen.

11. Verfahren nach einem der Ansprüche 5 bis 10, bei dem die Fluidstrahlen (5) so ausgebildet werden, dass eine gesamte Breite des Fördergurtes (2) mit Fluid beaufschlagt wird.

## Claims

1. Apparatus (1) for cleaning a surface (6) of a conveyor belt (2) movable in a movement direction (16) of residues of materials conveyed in the context of mining, in particular overburden and/or raw materials conveyed in the context of mining, comprising:
a nozzle bar (3) with a plurality of nozzles (4) for applying fluid jets (5) to the surface (6) of the conveyor belt (2);
at least one fluid-removal element (24) for removing at least some of the fluid from the surface (6),
wherein the nozzles are designed and oriented such that the fluid jets (5) come into contact with the surface (6), in a direction counter to the movement direction (16), at an angle of incidence (8) of less than 90°, wherein the apparatus (1) further comprises a mechanical precision wiper (18), over which the conveyor belt (2) is guidable, wherein the precision wiper (18) is formed between the nozzle bar (3) and the fluid-removal element (24),
**characterized in that** the fluid-removal element (24) comprises an adhesion roller (21), which has an elastomeric coating on its circumference, and wherein the apparatus (1) comprises a high-pressure fluid-supply (25) for supplying a fluid to the nozzle bar (3) at a pressure of at least 30 bar.

2. Apparatus according to Claim 1, in the case of which the nozzles have an opening angle (11) of 20° to 60°.

3. Apparatus (1) according to one of the preceding claims, in the case of which the nozzles (4) are designed in the form of flat-jet nozzles, and these are designed and arranged such that adjacent fluid jets (5) do not overlap on the surface (6).

4. Apparatus (1) according to one of the preceding claims, in the case of which the nozzles (4) are designed and arranged such that an entire width of the conveyor belt (2) is subjectable to the action of fluid by way of the fluid jets (5) which can be generated by the nozzles.

5. Method for cleaning a surface (6) of a conveyor belt (2) moving in a movement direction (16) of residues of mining materials by way of an apparatus (1) according to one of the preceding claims, comprising the following steps:
a) subjecting the surface (6) to a plurality of fluid jets (5) at an operating pressure of at least 30 bar at a predefinable angle of incidence (8) of less than 90°, counter to the movement direction (16), for the purpose of removing the residues; and
b) removing at least some of the fluid from the surface (6),
wherein, following step a) and prior to step b), the surface (6) of the conveyor belt (2) is guided over the mechanical precision wiper (18).

6. Method according to Claim 5, in the case of which the materials conveyed in the context of mining comprise overburden and/or raw materials conveyed in the context of mining.

7. Method according to Claim 5 or 6, in the case of which an angle of incidence (8) of between 20° and 60° is predefined.

8. Method according to one of Claims 5 to 7, in the case of which the fluid jets (5) have an opening angle (11) of 20° to 60°.

9. Method according to one of Claims 5 to 8, in the case of which the operating pressure is defined in dependence on at least one of the following parameters:
i) the type of material conveyed in the context of mining,
ii) ambient conditions, in particular the temperature and/or the humidity;
iii) a thickness is determined for the residues on the surface (6); and
iv) a movement speed of the conveyor belt.

10. Method according to one of Claims 5 to 9, in the case of which the fluid jets (5) are guided in the form of a flat cone (14) onto the surface, and the fluid jets (5) are designed such that there is no overlap of adjacent fluid jets (5) on the surface (6) .

11. Method according to one of Claims 5 to 10, in the case of which the fluid jets (5) are designed such that an entire width of the conveyor belt (2) is subjected to the action of fluid.

## Revendications

1. Dispositif (1) pour nettoyer une surface (6) d'une bande transporteuse (2) déplaçable dans une direction de déplacement (16) de résidus de matières transportées par l'exploitation minière, notamment de matières premières et/ou de déblais transportés par l'exploitation minière, comprenant :
une barre de buses (3) avec une pluralité de buses (4) pour appliquer des jets de fluide (5) sur la surface (6) de la bande transporteuse (2) ;
au moins un élément d'élimination de fluide (24) pour éliminer au moins une partie du fluide de la surface (6), les buses étant configurées et orientées de telle sorte que les jets de fluide (5) rencontrent la surface (6) à l'opposé de la direction de déplacement (16) avec un angle d'incidence (8) de moins de 90°, le dispositif (1) comprenant en outre un racleur fin mécanique (18) sur lequel la bande transporteuse (2) peut passer, le racleur fin (18) étant formé entre la barre de buses (3) et l'élément d'élimination de fluide (24), **caractérisé en ce que** l'élément d'élimination de fluide (24) comprend un rouleau d'adhésion (21) qui présente un revêtement élastomère sur la périphérie, et le dispositif (1) comprenant une alimentation en fluide haute pression (25) pour fournir un fluide à la barre de buses (3) sous une pression d'au moins 30 bars.

2. Dispositif selon la revendication 1, dans lequel les buses présentent un angle d'ouverture (11) de 20° à 60°.

3. Dispositif (1) selon l'une quelconque des revendications précédentes, dans lequel les buses (4) sont configurées sous forme de buses à jet plat et celles-ci sont configurées et agencées de telle sorte que des jets de fluide (5) voisins ne se chevauchent pas sur la surface (6).

4. Dispositif (1) selon l'une quelconque des revendications précédentes, dans lequel les buses (4) sont configurées et agencées de telle sorte qu'une largeur totale de la bande transporteuse (2) peut être sollicitée par du fluide par les jets de fluide (5) qu'elles peuvent produire.

5. Procédé de nettoyage d'une surface (6) d'une bande transporteuse (2) se déplaçant dans une direction de déplacement (16) de résidus de matières minières avec un dispositif (1) selon l'une quelconque des revendications précédentes, comprenant les étapes suivantes :
a) la sollicitation de la surface (6) avec une pluralité de jets de fluide (5) sous une pression de service d'au moins 30 bars à un angle d'incidence (8) prédéfinissable de moins de 90° à l'encontre de la direction de déplacement (16) afin d'éliminer les résidus ;
b) l'élimination d'au moins une partie du fluide de la surface (6),
après l'étape a) et avant l'étape b), la surface (6) de la bande transporteuse (2) étant passé sur le racleur fin mécanique (18).

6. Procédé selon la revendication 5, dans lequel les matières transportées par l'exploitation minière comprennent des matières premières et/ou des déblais transportés par l'exploitation minière.

7. Procédé selon la revendication 5 ou 6, dans lequel un angle d'incidence (8) compris entre 20° et 60° est prédéfini.

8. Procédé selon l'une quelconque des revendications 5 à 7, dans lequel les jets de fluide (5) présentent un angle d'ouverture (11) de 20° à 60°.

9. Procédé selon l'une quelconque des revendications 5 à 8, dans lequel la pression de service est établie en fonction d'au moins un des paramètres suivants :
i) la nature de la matière transportée par l'exploitation minière,
ii) les conditions ambiantes, notamment la température et/ou l'humidité de l'air ;
iii) une épaisseur des résidus sur la surface (6) est déterminée ; et
iv) une vitesse de déplacement de la bande transporteuse.

10. Procédé selon l'une quelconque des revendications 5 à 9, dans lequel les jets de fluide (5) sont guidés sur la surface sous forme de cônes plats (14) et les jets de fluide (5) sont formés de telle sorte que des jets de fluide (5) voisins ne se chevauchent pas sur la surface (6) .

11. Procédé selon l'une quelconque des revendications 5 à 10, dans lequel les jets de fluide (5) sont formés de telle sorte qu'une largeur totale de la bande transporteuse (2) est sollicitée par du fluide.
